# EUROPEAN PATENT APPLICATION

(11) **EP 4 845 001 A1**
(43) Date of publication of application: **25.11.2026**
(21) Application number: 25758327.8
(22) Date of filing: 20.02.2025
(51) Int. Cl.: H02K 15/142, H02K 5/08

(54) **MOTOR, BLOWER, REFRIGERATION DEVICE, VEHICLE, METHOD FOR RECYCLING MOTOR, AND METHOD FOR MANUFACTURING MOTOR**

(30) Priority: 22.02.2024 JP 2024025356
(71) Applicant: DAIKIN INDUSTRIES, LTD., Osaka-shi, Osaka 530-0001 (JP)
(72) Inventor: HIRATSUKA, Daisuke, Osaka-shi, Osaka 530-0001 (JP); HIBINO, Hiroshi, Osaka-shi, Osaka 530-0001 (JP)
(74) Representative: Goddar, Heinz J.
(86) International application number: PCT/JP2025/005903
(87) International publication number: WO 2025/178104

(57) **Abstract**

This motor is provided with: a sealing part (40) that is configured from sealing resin; and a sealed part (50) that is sealed by the sealing part (40). The sealing part (40) includes a first region (41) and a second region (42) that thermally decomposes more easily than the first region (41). The second region (42) is provided between the first region (41) and the sealed part (50). The second region (42) includes a first filler that thermally decomposes at a temperature equal to or higher than a first temperature. The percentage by which the first filler is contained in the second region (42) is greater than the percentage by which the first filler is contained in the first region (41).

## Description

### TECHNICAL FIELD

The present disclosure relates to a motor, a blower, a refrigeration device, a vehicle, a method for recycling a motor, and a method for manufacturing a motor.

### BACKGROUND ART

Motors encapsulated with an encapsulating resin are known. Patent Literature 1 discloses an example of such a motor (referred to as a molded motor in Patent Literature 1). In such motors, an encapsulated portion including recyclable components is encapsulated by an encapsulating portion. Examples of the recyclable components include components made of metal, magnets, and the like.

### CITATION LIST

### Patent Literature

Patent Literature 1: JP2007-20348A

### SUMMARY OF INVENTION

### Technical Problem

From the standpoint of recycling, it is desirable that recyclable components of a motor be separable from the other portions of the motor. However, because the encapsulating portion is intended to protect the encapsulated portion, the encapsulating portion is configured to have high stability against heat, light, and the like and to be difficult to separate from the encapsulated portion.

One example of a method for separating the encapsulating portion from the encapsulated portion is to burn the encapsulating portion by heating the motor. However, when the encapsulating portion burns, contaminants such as soot and ash may adhere to the encapsulated portion. Contamination associated with combustion may also degrade the quality of the recyclable components included in the encapsulated portion. Another method is to recover the recyclable components after crushing the motor. However, this method requires large-scale equipment, resulting in high costs for recovering the recyclable components. In addition, conventional motors may be treated as industrial waste because it is difficult to separate the encapsulating portion from the encapsulated portion in a manner that allows the recyclable components to be removed in a readily recyclable state.

### Solution to Problem

To achieve the foregoing objectives and in accordance with a first aspect, a motor includes an encapsulating portion formed of an encapsulating resin, and an encapsulated portion encapsulated by the encapsulating portion. The encapsulating portion includes a first region and a second region that is more readily thermally decomposable than the first region. The second region is provided between the first region and the encapsulated portion. The second region includes a first filler that thermally decomposes at a temperature higher than or equal to a first temperature. A content of the first filler in the second region is greater than a content of the first filler in the first region.

With this configuration, since the content of the first filler in the second region is greater than the content of the first filler in the first region, the second region is more readily thermally decomposed than the first region. Since the second region is more readily thermally decomposable than the first region, the first region of the encapsulating portion can be separated from the encapsulated portion by heating the motor to a temperature higher than or equal to the first temperature. In this manner, recyclable components included in the encapsulated portion can be readily recovered from the motor.

In accordance with a second aspect, in the motor according to the first aspect, a base resin of the encapsulating resin forming the second region is of a same type as a base resin of the encapsulating resin forming the first region.

With this configuration, since each of the first region and the second region is formed of an encapsulating resin that uses the same type of resin as a base resin, an interface is less likely to be formed between the first region and the second region. Since the first region and the second region are thus firmly connected to each other, the strength of the encapsulating portion is improved.

In accordance with a third aspect, in the motor according to the first aspect, no interface is formed between the first region and the second region.

With this configuration, since the first region and the second region are more firmly connected to each other, the strength of the encapsulating portion is further improved.

In accordance with a fourth aspect, in the motor according to any one of the first to third aspects, the content of the first filler in the second region is in a range of 50% by mass to 80% by mass.

When the content of the first filler is less than 50% by mass, thermal decomposition of the encapsulating portion does not readily proceed. When the content of the first filler in the second region is 50% by mass or more, thermal decomposition of the first filler creates more voids in the second region, and heating to a temperature higher than or equal to the first temperature reduces the strength of the second region. This reduces the load required to separate the first region of the encapsulating portion from the encapsulated portion. When the content of the first filler 32 is greater than 80% by mass, the encapsulating portion is difficult to form. In this regard, with the above configuration, the content of the first filler in the second region is in the range of 50% by mass to 80% by mass. Therefore, the second region of the encapsulating portion can be made readily thermally decomposable while facilitating formation of the second region during formation of the encapsulating portion.

In accordance with a fifth aspect, in the motor according to any one of the first to fourth aspects, the first temperature of the first filler included in the second region is lower than or equal to a combustion temperature of a first encapsulating resin forming the first region.

With this configuration, when the first region of the encapsulating portion is separated from the encapsulated portion by heating at a temperature in a range of the first temperature to the combustion temperature, combustion of the first encapsulating resin forming the first region is suppressed. This suppresses adhesion of contamination associated with combustion to the encapsulated portion.

In accordance with a sixth aspect, in the motor according to any one of the first to fifth aspects, the first filler is formed of aluminum hydroxide.

With this configuration, the encapsulating resin forming the second region can be readily thermally decomposed by aluminum hydroxide.

In accordance with a seventh aspect, in the motor according to any one of the first to sixth aspects, the first region includes a second filler that thermally decomposes at a temperature higher than or equal to a second temperature higher than the first temperature. A content of the second filler in the second region is less than a content of the second filler in the first region.

With this configuration, since the content of the second filler in the second region is less than the content of the second filler in the first region, the first region is even less readily thermally decomposable than the second region. Thus, when the first region of the encapsulating portion is separated from the encapsulated portion, the second region is thermally decomposed before the first region.

In accordance with an eighth aspect, in the motor according to any one of the first to seventh aspects, the encapsulated portion includes at least one of a winding, a core material, and a magnet.

With this configuration, any one of the winding, the core material, and the magnet included in the encapsulated portion can be readily separated from the first region of the encapsulating portion.

In accordance with a ninth aspect, in the motor according to the eighth aspect, the encapsulated portion includes the magnet, and the first temperature of the first filler included in the second region is higher than a Curie temperature of the magnet.

With this configuration, the magnet can be demagnetized when the encapsulating portion is heated. Demagnetizing the magnet allows the magnet to be more easily recovered from the motor.

In accordance with a tenth aspect, a blower includes the motor according to any one of the first to ninth aspects.

With this configuration, recyclable components included in the encapsulated portion can be readily recovered from the motor of the blower.

In accordance with an eleventh aspect, a refrigeration device includes the motor according to any one of the first to ninth aspects.

With this configuration, recyclable components included in the encapsulated portion can be readily recovered from the motor of the refrigeration device.

In accordance with a twelfth aspect, a vehicle includes the motor according to any one of the first to ninth aspects.

With this configuration, recyclable components included in the encapsulated portion can be readily recovered from the motor of the vehicle.

In accordance with a thirteenth aspect, a method for recycling the motor according to any one of the first to ninth aspects is provided. The method includes a heating step of heating the motor to a temperature higher than or equal to the first temperature.

With this configuration, the second region of the encapsulating portion thermally decomposes when the motor is heated to a temperature higher than or equal to the first temperature in the heating step. Since thermal decomposition of the second region separates the first region of the encapsulating portion from the encapsulated portion, recyclable components included in the encapsulated portion can be recovered from the motor.

To achieve the foregoing objective and in accordance with a fourteenth aspect, a method for manufacturing a motor is provided. The motor includes an encapsulating portion formed of a first encapsulating resin and a second encapsulating resin that is more readily thermally decomposable than the first encapsulating resin, and an encapsulated portion encapsulated by the encapsulating portion. The method includes a molding step of forming the encapsulating portion. In the molding step, the encapsulating portion is formed such that the second encapsulating resin is provided between the first encapsulating resin and the encapsulated portion.

With this configuration, a motor can be configured such that the encapsulating portion and the encapsulated portion are readily separable by heat.

In accordance with a fifteenth aspect, in the method for manufacturing a motor according to the fourteenth aspect, in the molding step, the encapsulating portion is formed by a single transfer molding operation using an injection cylinder that contains the first encapsulating resin and the second encapsulating resin.

With this configuration, the encapsulating portion can be formed by a single transfer molding operation. This reduces the number of manufacturing steps for the motor.

In accordance with a sixteenth aspect, in the method for manufacturing a motor according to the fourteenth aspect, the molding step includes: forming a part of the encapsulating portion using the second encapsulating resin; and forming another part of the encapsulating portion using the first encapsulating resin so as to cover at least part of a formed portion formed using the second encapsulating resin.

With this configuration, the first region of the encapsulating portion, which is formed of the first encapsulating resin, and the second region of the encapsulating portion, which is formed of the second encapsulating resin, are formed separately. Thus, the second encapsulating resin can be readily arranged between the first encapsulating resin and the encapsulated portion.

### BRIEF DESCRIPTION OF DRAWINGS

[Fig. 1] is a cross-sectional view of a blower according to a first embodiment.
[Fig. 2] is a schematic diagram of a first region and a second region of an encapsulating portion.
[Fig. 3] is a cross-sectional view taken along line D3-D3 in Fig. 1.
[Fig. 4] is a diagram illustrating a molding step in a method for manufacturing a motor according to the first embodiment.
[Fig. 5] is a diagram illustrating the molding step in the method for manufacturing a motor according to the first embodiment.
[Fig. 6] is a diagram illustrating the molding step in the method for manufacturing a motor according to the first embodiment.
[Fig. 7] is a diagram illustrating a heating step in a method for recycling a motor.
[Fig. 8] is a diagram illustrating a separating step in the method for recycling a motor.
[Fig. 9] is a diagram illustrating a molding step in a method for manufacturing a motor according to a second embodiment.
[Fig. 10] is a diagram illustrating the molding step in the method for manufacturing a motor according to the second embodiment.
[Fig. 11] is a diagram illustrating the molding step in the method for manufacturing a motor according to the second embodiment.
[Fig. 12] is a diagram illustrating the molding step in the method for manufacturing a motor according to the second embodiment.
[Fig. 13] is a schematic configuration diagram of a refrigeration device according to a third embodiment.
[Fig. 14] is a cross-sectional view of a compressor of the refrigeration device according to the third embodiment.
[Fig. 15] is a schematic diagram of a stator core and a magnet according to the third embodiment.
[Fig. 16] is a schematic configuration diagram of a vehicle according to a fourth embodiment.
[Fig. 17] is a schematic diagram illustrating an encapsulating portion and an encapsulated portion according to a modification.
[Fig. 18] is a schematic diagram illustrating an encapsulating portion and an encapsulated portion according to a modification.
[Fig. 19] is a schematic diagram illustrating an encapsulating portion and an encapsulated portion according to a modification.

### DESCRIPTION OF EMBODIMENTS

### <First Embodiment>

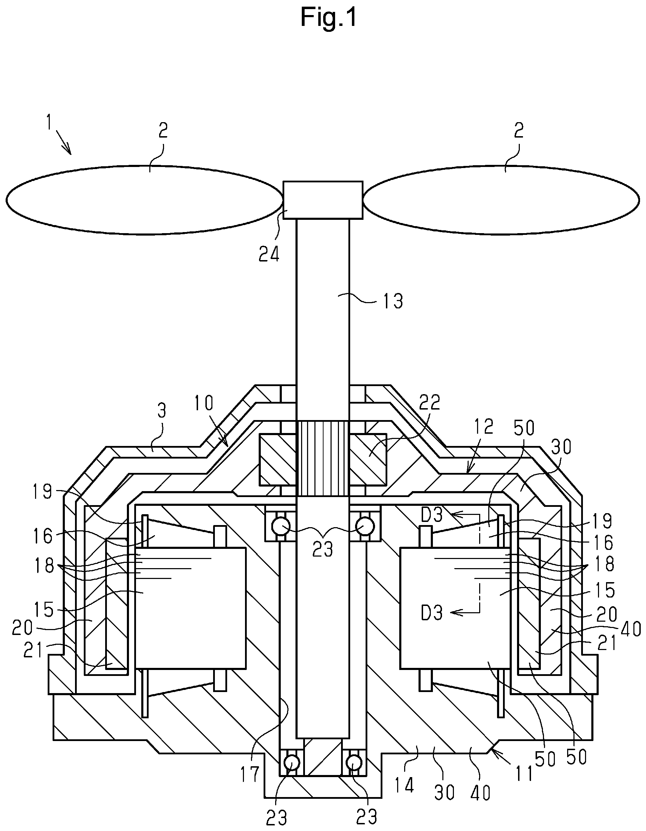

A blower 1, a motor 10, a method for manufacturing the motor 10, and a method for recycling the motor 10 according to a first embodiment will now be described with reference to Figs. 1 to 8.

### <Blower>

Referring to Fig. 1, the blower 1 includes the motor 10. A fan 2 is attached to a rotating shaft 13 of the motor 10. The motor 10 is a fan motor that rotates the fan 2 of the blower 1. The motor 10 is accommodated in a casing 3.

### <Motor>

In one example, the motor 10 is configured as an outer-rotor motor. The motor 10 includes a stator 11, a rotor 12, and the rotating shaft 13.

The stator 11 includes a stator body portion 14, a stator core 15, and windings 16. In one example, the stator core 15 and the windings 16 are integrally formed with the stator body portion 14. The stator body portion 14 has a through-hole 17 in which the rotating shaft 13 is arranged. The stator core 15 is fixed to the stator body portion 14. The stator core 15 is formed of a core material 18. In one example, the core material 18 is a stack of electromagnetic steel sheets. The windings 16 are wound around teeth of the stator core 15 via insulators 19. In one example, the windings 16 are copper wires.

The rotor 12 includes a rotor body portion 20 and magnets 21. The magnets 21 are integrally formed with the rotor body portion 20. The rotor body portion 20 is formed in a cup shape that accommodates the stator 11 inside the rotor body portion 20. The magnets 21 are provided inside a cylindrical portion of the rotor body portion 20. The magnets 21 are located radially outward of the stator core 15 of the stator 11. In one example, the magnets 21 are neodymium magnets. The rotor body portion 20 is fixed to the rotating shaft 13 by a metal fitting 22.

The rotating shaft 13 is arranged in the through-hole 17 of the stator body portion 14 via bearings 23 so as to rotate relative to the stator 11. In one example, the fan 2 is attached to an end portion 24 of the rotating shaft 13.

### <Encapsulating Resin>

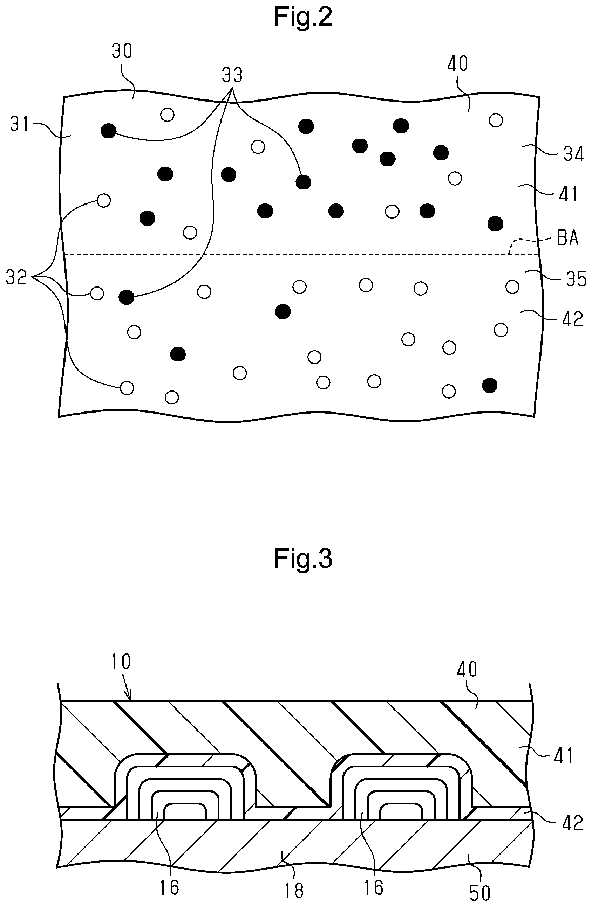

Referring to Figs. 1 and 2, the stator body portion 14 and the rotor body portion 20 are formed of an encapsulating resin 30. The encapsulating resin 30 is formed by adding a filler to a resin containing a base resin 31. In one example, the base resin 31 is a resin contained in the largest amount in the encapsulating resin 30. The filler is added to the resin containing the base resin 31 for purposes such as improving strength, reducing cost, and adjusting dielectric constant.

The filler contained in the resin containing the base resin 31 includes at least one of a first filler 32 and a second filler 33. The first filler 32 and the second filler 33 are thermally decomposable fillers that decompose at or above a predetermined temperature. The filler contained in the resin containing the base resin 31 may include an additional filler different from both the first filler 32 and the second filler 33. Examples of the additional filler include polystyrene, polyvinyl acetate, elastomers, polymethyl methacrylate, and the like as low-shrinkage additives; styrene, vinyl toluene, methyl methacrylate, and the like as reactive monomers; organic peroxides as curing agents; calcium carbonate, clay, and the like as filling materials; pigments as colorants; metal soaps and the like as release agents; alkaline-earth metal oxides and alkaline-earth metal hydroxides as thickeners; and glass fibers, carbon fibers, organic fibers, and the like as reinforcing fibers.

In one example, the first filler 32 and the second filler 33 are particulate. In one example, a particle diameter of each of the first filler 32 and the second filler 33 is in a range of 1 µm to 200 µm. Preferably, the particle diameter of each of the first filler 32 and the second filler 33 is in a range of 5 µm to 100 µm. Setting the particle diameter of each of the first filler 32 and the second filler 33 in the range of 5 µm to 100 µm improves dispersibility of the first filler 32 and the second filler 33 in the base resin 31.

When the first filler 32 and the second filler 33 are organic materials, the first filler 32 and the second filler 33 are fibrous. In one example, a diameter of a cross section of each of the fibrous first filler 32 and second filler 33 is in a range of 1 nm to 100 nm. Preferably, the diameter of the cross section of each of the fibrous first filler 32 and second filler 33 is in a range of 3 nm to 50 nm.

In one example, a fiber length of each of the fibrous first filler 32 and the fibrous second filler 33 is in a range of 10 nm to 10 µm. Preferably, the fiber length of each of the fibrous first filler 32 and the fibrous second filler 33 is in a range of 100 nm to 1 µm.

### <Base Resin>

For example, the base resin 31 is formed of either a thermosetting resin or a thermoplastic resin. Examples of the thermosetting resin include unsaturated polyester resins, epoxy resins, and vinyl ester resins. Examples of the thermoplastic resin include nylon and polyphenylene sulfide (PPS). In one example, the content of the base resin 31 in the encapsulating resin 30 is in a range of 10% by mass to 20% by mass. The content of the base resin 31 is a ratio of the mass of the base resin 31 to the mass of the encapsulating resin 30 per unit volume.

### <First Filler>

The first filler 32 thermally decomposes at a temperature higher than or equal to a first temperature. In one example, the first temperature is in a range of 200°C to 400°C. The first temperature is determined by the material forming the first filler 32.

For example, the first filler 32 is formed of any of a carbonate, a hydroxide, and an organic material. Examples of the first filler 32 that is a carbonate include zinc carbonate and sodium carbonate. Examples of the first filler 32 that is a hydroxide include magnesium hydroxide and aluminum hydroxide. Examples of the first filler 32 that is an organic material include cellulose nanofiber.

In one example, the first filler 32 is formed of aluminum hydroxide. Aluminum hydroxide is a thermally decomposable filler and also contributes to improving flame retardancy of the encapsulating resin 30. In one example, the first temperature is a temperature at which aluminum hydroxide starts to thermally decompose. When the encapsulating resin 30 contains aluminum hydroxide, the aluminum hydroxide decomposes at the first temperature, and therefore the second region 42 becomes brittle. In addition, combustion of the encapsulating resin 30 is suppressed because aluminum hydroxide generates water vapor during thermal decomposition.

### <Second Filler>

In one example, the second filler 33 thermally decomposes at a temperature higher than or equal to a second temperature. The second temperature is higher than the first temperature. The second filler 33 is formed of a material that thermally decomposes at a temperature higher than the first temperature, at which the first filler 32 thermally decomposes.

For example, the second filler 33 is formed of any of a carbonate, a hydroxide, and an organic material that is different from the first filler 32. For example, the second filler 33 is sodium carbonate or magnesium hydroxide.

### <First Encapsulating Resin and Second Encapsulating Resin>

Referring to Fig. 2, the encapsulating resin 30 includes a first encapsulating resin 34 and a second encapsulating resin 35. The first encapsulating resin 34 is a resin forming a first region 41 described later, and the second encapsulating resin 35 is a resin forming a second region 42 described later. The first encapsulating resin 34 and the second encapsulating resin 35 have different properties because the types, contents, and the like of various fillers blended into the base resin 31 are different. In one example, the content of the base resin 31 in the second encapsulating resin 35 is substantially equal to the content of the base resin 31 in the first encapsulating resin 34.

The second encapsulating resin 35 includes the first filler 32. The first encapsulating resin 34 may include the first filler 32 or may be free of the first filler 32. The content of the first filler 32 in the second encapsulating resin 35 is greater than the content of the first filler 32 in the first encapsulating resin 34. In one example, the content of the first filler 32 is the ratio of the mass of the first filler 32 to the mass of the encapsulating resin 30 per unit volume. When the first encapsulating resin 34 does not include the first filler 32, the content of the first filler 32 in the first encapsulating resin 34 is 0% by mass.

The second encapsulating resin 35 is more readily thermally decomposable than the first encapsulating resin 34. Since the content of the first filler 32 in the second encapsulating resin 35 is greater than that in the first encapsulating resin 34, the second encapsulating resin 35 decomposes to a greater extent than the first encapsulating resin 34. In one example, the second encapsulating resin 35 starts to thermally decompose when heated to a temperature higher than or equal to the first temperature.

In one example, the first encapsulating resin 34 includes the second filler 33. The second encapsulating resin 35 may include the second filler 33 or may be free of the second filler 33. The content of the second filler 33 in the first encapsulating resin 34 is greater than the content of the second filler 33 in the second encapsulating resin 35. In one example, the content of the second filler 33 is the ratio of the mass of the second filler 33 to the mass of the encapsulating resin 30 per unit volume. When the second encapsulating resin 35 does not include the second filler 33, the content of the second filler 33 in the second encapsulating resin 35 is 0% by mass.

### <Encapsulating Portion and Encapsulated Portion>

Referring to Figs. 1 and 2, the motor 10 includes an encapsulating portion 40 and an encapsulated portion 50. The encapsulating portion 40 is formed of the encapsulating resin 30. In one example, the encapsulating portion 40 is formed by the encapsulating resin 30. In one example, the encapsulating portion 40 includes the stator body portion 14 of the stator 11. In one example, the encapsulating portion 40 includes the rotor body portion 20 of the rotor 12.

The encapsulated portion 50 includes components formed of a material other than a resin material. In one example, the encapsulated portion 50 includes recyclable components, such as metals and magnets, that are recovered when the motor 10 is recycled. The encapsulated portion 50 is encapsulated by the encapsulating portion 40. In one example, the encapsulated portion 50 includes at least one of the windings 16, the core material 18, and the magnets 21. The encapsulated portion 50 may include at least one of the insulator 19, the metal fitting 22, and the bearings 23.

In one example, the encapsulated portion 50 includes the windings 16 and the core material 18 of the stator core 15. In this case, the encapsulating portion 40 corresponds to the stator body portion 14, and the encapsulated portion 50 corresponds to the windings 16 and the core material 18. In another example, the encapsulated portion 50 includes the magnets 21. In this case, the encapsulating portion 40 corresponds to the rotor body portion 20, and the encapsulated portion 50 corresponds to the magnets 21. Fig. 3 illustrates an example in which the encapsulating portion 40 corresponds to the stator body portion 14, and the encapsulated portion 50 corresponds to the windings 16 and the core material 18.

### <Arrangement of Encapsulating Portion>

Referring to Figs. 2 and 3, Fig. 3 illustrates a cross-sectional view taken along line D3-D3 in Fig. 1. Fig. 3 illustrates two windings 16 arranged in a circumferential direction and the core material 18 as viewed from the radially outer side.

The encapsulating portion 40 includes the first region 41 and the second region 42. The second region 42 is provided between the first region 41 and the encapsulated portion 50. The second region 42 is located closer to the encapsulated portion 50 than the first region 41 is. In one example, the second region 42 is directly joined to the encapsulated portion 50. The first region 41 is joined to the encapsulated portion 50 via the second region 42.

In one example, the encapsulating portion 40 is formed of the first encapsulating resin 34 and the second encapsulating resin 35. The base resin 31 of the encapsulating resin 30 forming the second region 42 is the same type of resin as the base resin 31 of the encapsulating resin 30 forming the first region 41. In one example, the first region 41 is formed of the first encapsulating resin 34, and the second region 42 is formed of the second encapsulating resin 35. No interface is formed between the first region 41 and the second region 42. The first encapsulating resin 34 forming the first region 41 and the second encapsulating resin 35 forming the second region 42 are mixed at a boundary BA between the first region 41 and the second region 42, so that the first region 41 and the second region 42 are integrally connected to each other.

The second region 42 includes the first filler 32. The first region 41 may include the first filler 32 or may be free of the first filler 32. The second region 42 is more readily thermally decomposable than the first region 41. In one example, the content of the first filler 32 in the second region 42 is greater than the content of the first filler 32 in the first region 41. In one example, the content of the first filler 32 in the second region 42 is in a range of 50% by mass to 80% by mass.

The first temperature of the first filler 32 included in the second region 42 is lower than or equal to the combustion temperature of the first encapsulating resin 34 forming the first region 41. The combustion temperature of the first encapsulating resin 34 is a temperature at which the first encapsulating resin 34 starts to burn. Preferably, the first temperature of the first filler 32 included in the second region 42 is lower than the combustion temperature of the first encapsulating resin 34 forming the first region 41. The second region 42 need only start to thermally decompose when the first region 41 of the encapsulating portion 40 starts to burn. Thus, heating the encapsulating portion 40 to a temperature higher than or equal to the first temperature and lower than or equal to the combustion temperature causes the second region 42 to thermally decompose before the first region 41 of the encapsulating portion 40 burns.

The first region 41 includes the second filler 33. The second region 42 may include the second filler 33 or may be free of the second filler 33. The content of the second filler 33 in the second region 42 is less than the content of the second filler 33 in the first region 41.

The filler content of the first region 41 is substantially equal to the filler content of the second region 42. The filler content is, per unit volume, the ratio of the combined mass of the first filler 32, the second filler 33, and any filler other than the first filler 32 and the second filler 33 to the mass of the encapsulating resin 30. Since the filler content of the first region 41 and the filler content of the second region 42 are substantially equal, the content of the base resin 31 in the encapsulating resin 30 of the first region 41 and the content of the base resin 31 in the encapsulating resin 30 of the second region 42 are substantially equal. This facilitates handling of the first encapsulating resin 34 and the second encapsulating resin 35 when forming the encapsulating portion 40.

### <Method for Manufacturing the Motor>

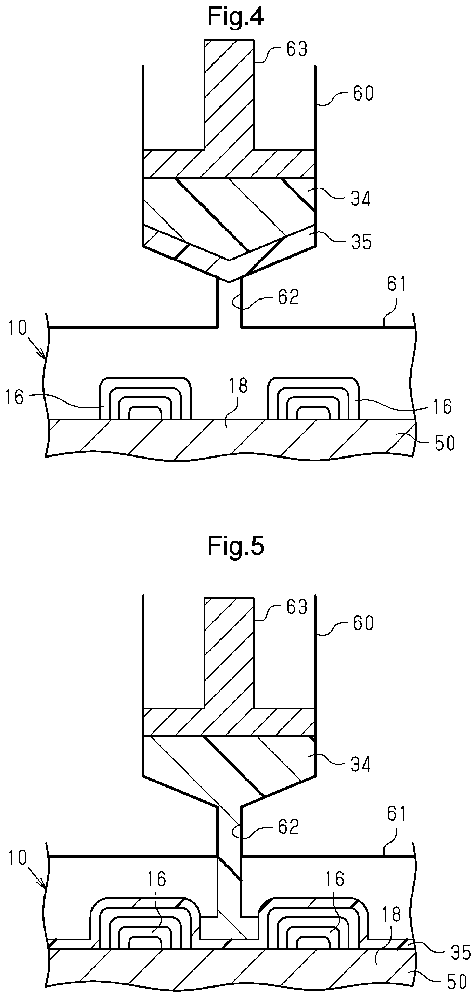

Referring to Figs. 4 to 6, a method for manufacturing the motor 10 including the encapsulating portion 40 and the encapsulated portion 50 will be described. The method for manufacturing the motor 10 includes a molding step. The molding step is a step of forming the encapsulating portion 40. In the molding step, the encapsulating portion 40 is formed such that the second encapsulating resin 35 is provided between the first encapsulating resin 34 and the encapsulated portion 50.

Referring to Fig. 4, the motor 10 of the present embodiment is formed by transfer molding. In one example, an injection cylinder 60 is used in the molding step. The injection cylinder 60 has an injection port 62 connected to a mold 61. The encapsulated portion 50 is fixed in the mold 61. A piston 63 pushes resin in the injection cylinder 60 out through the injection port 62, thereby filling the mold 61 with the resin.

In one example, in the molding step, the encapsulating portion 40 is formed by a single transfer molding operation using the injection cylinder 60. The injection cylinder 60 contains the first encapsulating resin 34 and the second encapsulating resin 35. In the injection cylinder 60, the second encapsulating resin 35 is contained closer to the injection port 62 than the first encapsulating resin 34 is. Thus, when the first encapsulating resin 34 and the second encapsulating resin 35 are pushed by the piston 63, the first encapsulating resin 34 is pushed out after the second encapsulating resin 35 is pushed out.

Referring to Fig. 5, the molding step includes a first stage and a second stage. In the first stage, the piston 63 pushes the second encapsulating resin 35 from the injection port 62 into the mold 61. The second encapsulating resin 35 pushed into the mold 61 covers the encapsulated portion 50. In one example, the injection port 62 is arranged above the encapsulated portion 50 fixed to the mold 61. This arrangement facilitates the flow of the second encapsulating resin 35 over the surface of the encapsulated portion 50, and therefore the second encapsulating resin 35 suitably covers the encapsulated portion 50.

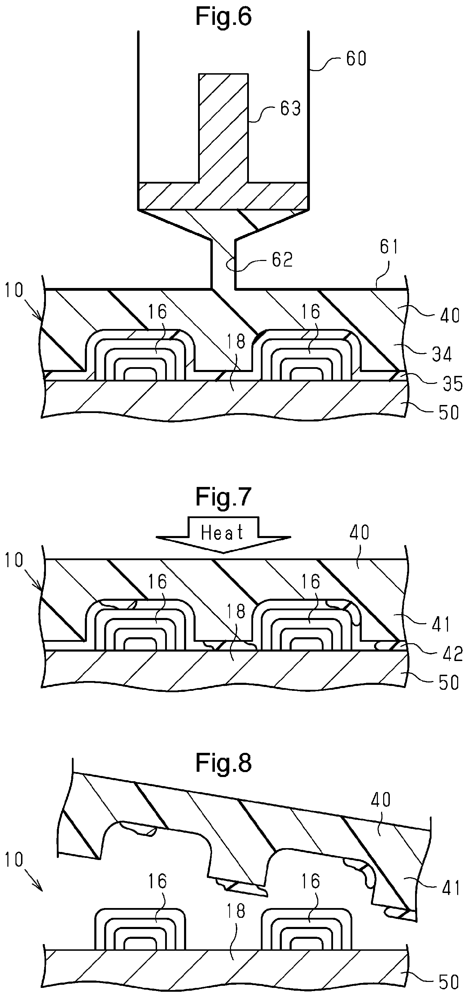

Referring to Fig. 6, in the second stage, the piston 63 further pushes the resin in the injection cylinder 60, thereby pushing the first encapsulating resin 34 from the injection port 62 into the mold 61. The first encapsulating resin 34 fills the space between the second encapsulating resin 35 and the mold 61.

When the first encapsulating resin 34 and the second encapsulating resin 35 cure, the encapsulating portion 40 joined to the encapsulated portion 50 is formed. In the encapsulating portion 40, the first region 41 is formed of the first encapsulating resin 34, and the second region 42 is formed of the second encapsulating resin 35. When the first encapsulating resin 34 is charged in the second stage, the second encapsulating resin 35 has not yet cured, and therefore the first encapsulating resin 34 and the second encapsulating resin 35 are mixed at the boundary between the first region 41 and the second region 42. Therefore, no interface is formed between the first region 41 and the second region 42.

### <Method for Recycling the Motor>

Referring to Figs. 3, 7, and 8, a recycling method for recycling the motor 10 will be described. The method for recycling the motor 10 is a method for recovering recyclable components included in the encapsulated portion 50.

Referring to Fig. 7, the method for recycling the motor 10 includes a heating step. The heating step is a step of heating the motor 10 to a temperature higher than or equal to the first temperature. In one example, heating in the heating step is performed at a temperature lower than or equal to the combustion temperature of the encapsulating resin 30. The heating step is performed in a furnace using an infrared heater, a far-infrared heater, or the like. Heating the motor 10 in the heating step causes the first filler 32 included in the encapsulating resin 30 forming the encapsulating portion 40 to thermally decompose. Thermal decomposition of the first filler 32 causes the second region 42, which includes a relatively large amount of the first filler 32, to thermally decompose before the first region 41. As a result of the thermal decomposition of the first filler 32, the second region 42 becomes brittle.

The method for recycling the motor 10 includes a separating step. The separating step is a step of separating the encapsulating portion 40 from the encapsulated portion 50. Since the second region 42 joined to the encapsulated portion 50 thermally decomposes in the heating step, the encapsulating portion 40 can be separated from the encapsulated portion 50.

### <Operation>

Operation of the present embodiment will now be described.

When motor components are resin-molded by a method such as insert molding or transfer molding, the encapsulating resin may flow into small gaps, such as gaps between windings. In this case, when the windings are recycled, it is difficult to remove the encapsulating resin from the gaps. In the motor 10, the second encapsulating resin 35 is joined to the encapsulated portion 50. When the motor 10 is heated to a temperature higher than or equal to the first temperature, the second region 42 of the encapsulating portion 40, which is joined to the encapsulated portion 50, thermally decomposes. Thermal decomposition of the second region 42 allows the first region 41 of the encapsulating portion 40 to be readily separated from the encapsulated portion 50.

### <Advantages>

The present embodiment has the following advantages.

(1-1) The motor 10 includes the encapsulating portion 40 and the encapsulated portion 50. The encapsulating portion 40 includes the first region 41 and the second region 42, which is more readily thermally decomposable than the first region 41. The second region 42 is provided between the first region 41 and the encapsulated portion 50. The content of the first filler 32 in the second region 42 is greater than the content of the first filler 32 in the first region 41.

With this configuration, since the content of the first filler 32 in the second region 42 is greater than the content of the first filler 32 in the first region 41, the second region 42 is more readily thermally decomposable than the first region 41. Since the second region 42 is more readily thermally decomposable than the first region 41, heating the motor 10 to a temperature higher than or equal to the first temperature allows the first region 41 of the encapsulating portion 40 to be separated from the encapsulated portion 50. In this manner, recyclable components included in the encapsulated portion 50 can be readily recovered from the motor 10.

(1-2) The base resin 31 of the encapsulating resin 30 forming the second region 42 is the same type of resin as the base resin 31 of the encapsulating resin 30 forming the first region 41.

With this configuration, each of the first region 41 and the second region 42 is formed of the encapsulating resin 30 including the same type of resin as the base resin 31, and therefore an interface is less likely to be formed between the first region 41 and the second region 42. Since the first region 41 and the second region 42 are thus firmly connected to each other, the strength of the encapsulating portion 40 is improved.

(1-3) No interface is formed between the first region 41 and the second region 42.

With this configuration, the first region 41 and the second region 42 are more firmly connected to each other, and therefore the strength of the encapsulating portion 40 is further improved.

(1-4) The content of the first filler 32 in the second region 42 is in a range of 50% by mass to 80% by mass.

If the content of the first filler 32 is less than 50% by mass, thermal decomposition of the encapsulating portion 40 does not readily proceed. When the content of the first filler 32 in the second region 42 is 50% by mass or more, thermal decomposition of the first filler 32 creates more voids in the second region 42, and heating to a temperature higher than or equal to the first temperature reduces the strength of the second region 42. This reduces the load required to separate the first region 41 of the encapsulating portion 40 from the encapsulated portion 50. When the content of the first filler 32 is greater than 80% by mass, the encapsulating portion 40 is difficult to form. In this respect, according to the above configuration, the content of the first filler 32 in the second region 42 is in a range of 50% by mass to 80% by mass. Therefore, the second region 42 of the encapsulating portion 40 can be made readily thermally decomposable while facilitating formation of the second region 42 when forming the encapsulating portion 40.

(1-5) The first temperature of the first filler 32 included in the second region 42 is lower than or equal to the combustion temperature of the first encapsulating resin 34 forming the first region 41.

With this configuration, when the first region 41 of the encapsulating portion 40 is separated from the encapsulated portion 50 by heating the motor 10 at a temperature in a range of the first temperature to the combustion temperature, combustion of the first encapsulating resin 34 forming the first region 41 is suppressed. Therefore, adhesion of contamination associated with combustion to the encapsulated portion 50 can be suppressed.

(1-6) The first filler 32 is formed of aluminum hydroxide.

With this configuration, aluminum hydroxide enables thermal decomposition of the encapsulating resin 30 forming the second region 42.

(1-7) The content of the second filler 33 in the second region 42 is less than the content of the second filler 33 in the first region 41.

With this configuration, since the content of the second filler 33 in the second region 42 is less than the content of the second filler 33 in the first region 41, the first region 41 is even less readily thermally decomposable than the second region 42. Therefore, when separating the first region 41 of the encapsulating portion 40 from the encapsulated portion 50, the second region 42 is caused to thermally decompose before the first region 41.

(1-8) The encapsulated portion 50 includes at least one of the windings 16, the core material 18, and the magnets 21.

With this configuration, any one of the windings 16, the core material 18, and the magnets 21 included in the encapsulated portion 50 can be readily separated from the first region 41 of the encapsulating portion 40.

(1-9) The blower 1 includes the motor 10.

With this configuration, recyclable components included in the encapsulated portion 50 can be readily recovered from the motor 10 of the blower 1.

(1-10) The method for recycling the motor 10 includes the heating step. The heating step is a step of heating the motor 10 to a temperature higher than or equal to the first temperature.

With this configuration, heating the motor 10 to a temperature higher than or equal to the first temperature in the heating step causes the second region 42 of the encapsulating portion 40 to thermally decompose. Thermal decomposition of the second region 42 separates the first region 41 of the encapsulating portion 40 from the encapsulated portion 50, and therefore recyclable components included in the encapsulated portion 50 can be recovered from the motor 10.

(1-11) The method for manufacturing the motor 10 includes the molding step. The molding step is a step of forming the encapsulating portion 40. In the molding step, the encapsulating portion 40 is formed such that the second encapsulating resin 35 is provided between the first encapsulating resin 34 and the encapsulated portion 50.

With this configuration, the motor 10 can be configured such that the encapsulating portion 40 and the encapsulated portion 50 are readily separable by heat.

(1-12) In the molding step, the encapsulating portion 40 is formed by a single transfer molding operation using the injection cylinder 60 that contains the first encapsulating resin 34 and the second encapsulating resin 35.

With this configuration, the encapsulating portion 40 is formed by a single transfer molding operation. This reduces the number of manufacturing steps for the motor 10.

### <Second Embodiment>

A blower 1, a motor 10, a method for manufacturing the motor 10, and a method for recycling the motor 10 according to a second embodiment will be described with reference to Fig. 2 and Figs. 9 to 12. Components of the present embodiment that are common to those of the first embodiment are denoted by the same reference signs as in the first embodiment, and redundant description thereof will be omitted.

In the present embodiment, the molding step in the method for manufacturing the motor 10 differs from that of the first embodiment. The motor 10 of the present embodiment is formed by two-shot molding. The molding step of the present embodiment includes a first step and a second step.

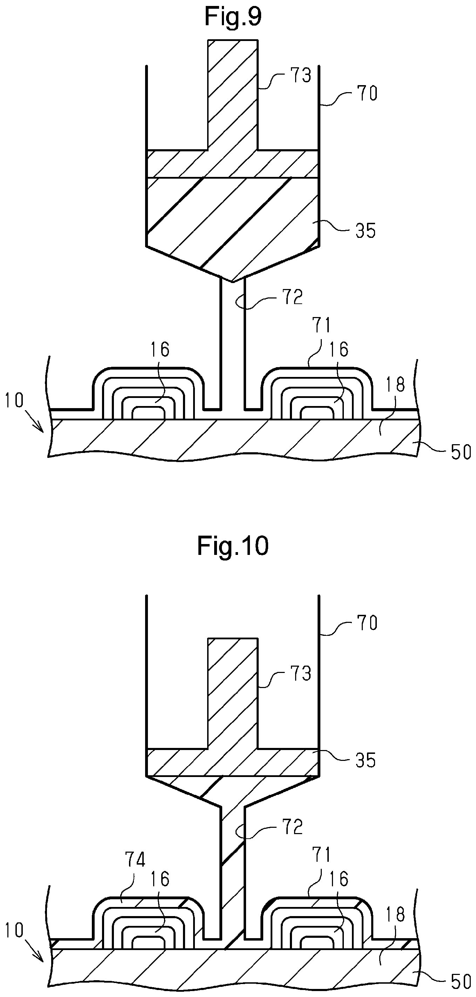

Referring to Figs. 2 and 9, the first step is a step of forming a part of the encapsulating portion 40 using the second encapsulating resin 35. In the first step, a first injection cylinder 70 is used. The first injection cylinder 70 contains the second encapsulating resin 35. The first injection cylinder 70 has a first injection port 72 connected to a first mold 71. The first mold 71 has a shape corresponding to the second region 42 of the encapsulating portion 40. A first piston 73 pushes resin in the first injection cylinder 70 out through the first injection port 72, thereby filling the first mold 71 with the resin.

Referring to Figs. 2 and 10, in the first step, the second encapsulating resin 35 is pushed out from the first injection cylinder 70, thereby forming a formed portion 74 that covers the encapsulated portion 50 in the encapsulating portion 40. The formed portion 74 corresponds to the second region 42 of the encapsulating portion 40.

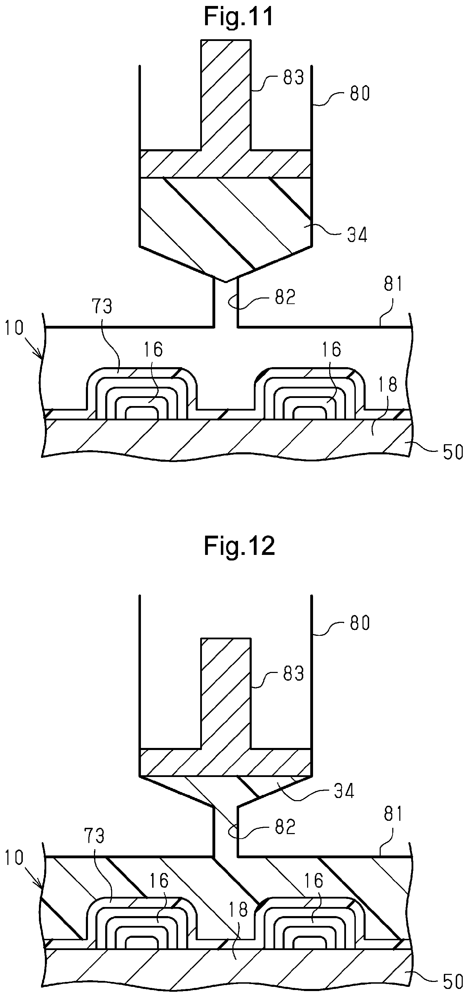

Referring to Figs. 2 and 11, the second step is a step of forming another part of the encapsulating portion 40 using the first encapsulating resin 34 so as to cover at least part of the formed portion 74 formed using the second encapsulating resin 35. In the second step, a second injection cylinder 80 is used. The second injection cylinder 80 contains the first encapsulating resin 34. The second injection cylinder 80 has a second injection port 82 connected to a second mold 81. The second mold 81 has a shape corresponding to the first region 41 of the encapsulating portion 40. A second piston 83 pushes resin in the second injection cylinder 80 out through the second injection port 82, thereby filling the second mold 81 with the resin.

Referring to Figs. 2 and 12, in the second step, the first encapsulating resin 34 is pushed out from the second injection cylinder 80, thereby forming a portion of the encapsulating portion 40 other than the formed portion 74. The portion other than the formed portion 74 corresponds to the first region 41 of the encapsulating portion 40.

The present embodiment has the following advantages.

With this configuration, the first region 41 of the encapsulating portion 40 formed of the first encapsulating resin 34 and the second region 42 of the encapsulating portion 40 formed of the second encapsulating resin 35 are formed separately. Thus, the second encapsulating resin 35 is readily arranged between the first encapsulating resin 34 and the encapsulated portion 50.

### <Third Embodiment>

A refrigeration device 100 according to a third embodiment will be described with reference to Figs. 2 and 3 and Figs. 13 to 15. Components of the present embodiment that are common to those of the first embodiment are denoted by the same reference signs as in the first embodiment, and redundant description thereof will be omitted.

The refrigeration device 100 includes a motor 200. The motor 200 includes an encapsulating portion 40 and an encapsulated portion 50 corresponding to those of the motor 10 of the first embodiment. In one example, the motor 200 is included in a compressor 110 of the refrigeration device 100.

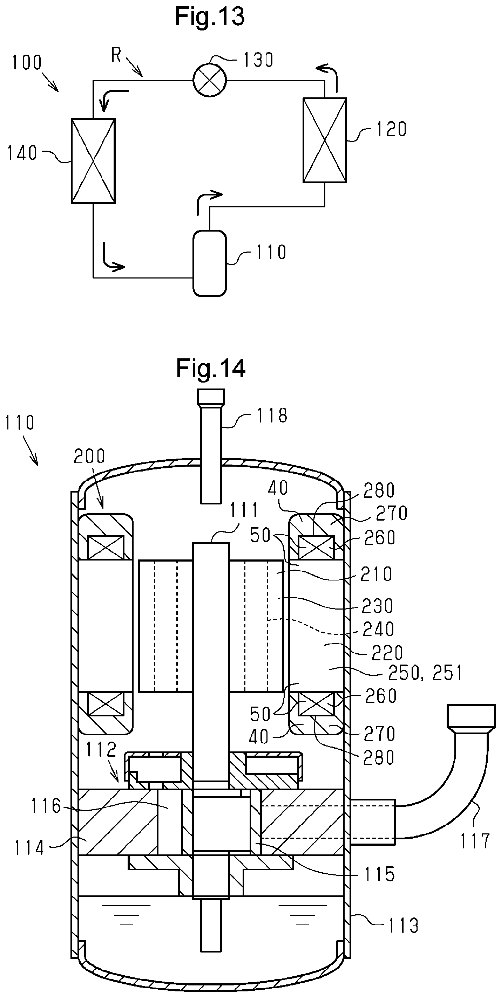

Referring to Fig. 13, Fig. 13 is a schematic configuration diagram of the refrigeration device 100. The refrigeration device 100 includes a refrigerant circuit R. The refrigerant circuit R is filled with a refrigerant. The refrigerant circuit R performs a vapor-compression refrigeration cycle. The compressor 110 is provided in the refrigerant circuit R of the refrigeration device 100.

Referring to Figs. 3 and 14, the compressor 110 further includes a drive shaft 111 and a compression mechanism 112. The drive shaft 111 is provided in a casing 113 so as to extend along a rotational axis. The drive shaft 111 is rotationally driven by the motor 200.

The compression mechanism 112 is accommodated in the casing 113. The compression mechanism 112 includes a cylinder 114 and a piston 115. The piston 115 is coupled to the drive shaft 111 and is provided inside the cylinder 114. A cylinder chamber 116 is formed between the inner peripheral surface of the cylinder 114 and the outer peripheral surface of the piston 115. The compression mechanism 112 includes a suction pipe 117 and a discharge pipe 118. The suction pipe 117 communicates with the cylinder chamber 116 of the compression mechanism 112. The discharge pipe 118 communicates with the internal space of the casing 113.

Referring to Fig. 13, in one example, the refrigerant circuit R is provided with, in addition to the compressor 110, a radiator 120, a decompression mechanism 130 formed of an expansion valve, and an evaporator 140. In the refrigeration cycle, after being compressed by the compressor 110, the refrigerant releases heat to air in the radiator 120. After releasing heat, the refrigerant is decompressed by the decompression mechanism 130 and then evaporates in the evaporator 140. The evaporated refrigerant is drawn into the compressor 110.

Low-pressure refrigerant from the refrigerant circuit R is drawn into the cylinder chamber 116 of the compression mechanism 112 through the suction pipe 117. The compression mechanism 112 compresses the refrigerant in the cylinder chamber 116 using the piston 115 driven by the drive shaft 111. The inside of the casing 113 is filled with high-pressure refrigerant discharged from the compression mechanism 112. After flowing through the motor 200, the high-pressure refrigerant is discharged to the refrigerant circuit R through the discharge pipe 118.

In the present embodiment, the motor 200 is a magnet-embedded rotating electric machine. The motor 200 is an inner-rotor motor. The motor 200 includes a rotor 210 and a stator 220.

The rotor 210 rotates about the rotational axis by a magnetic field generated by the stator 220. The rotor 210 includes a rotor core 230 and a magnet 240.

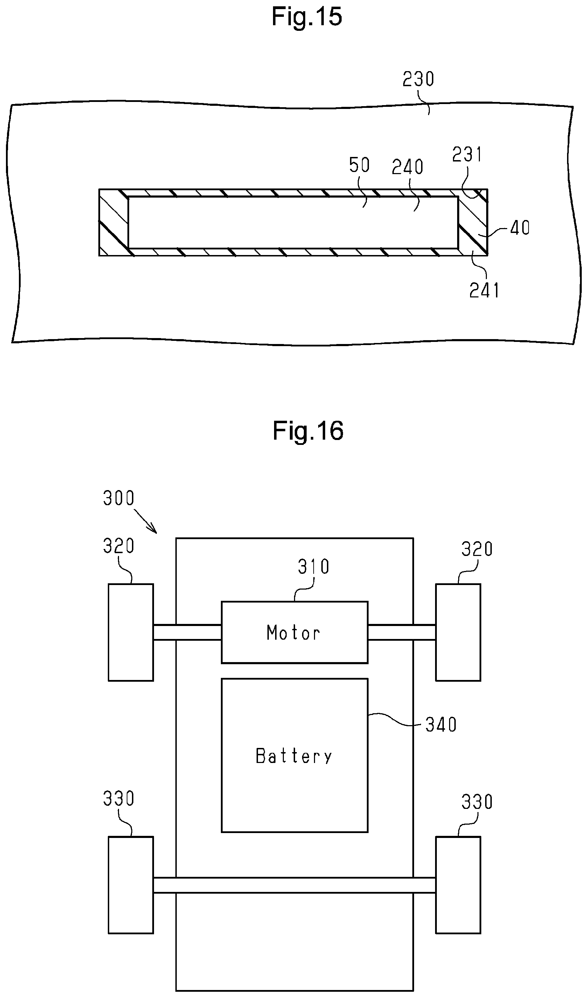

Fig. 15 is a plan view of the rotor core 230 near a slot 231. The magnet 240 is arranged in the slot 231 provided in the rotor core 230. In one example, the magnet 240 is fixed to the slot 231 with an adhesive resin 241. The adhesive resin 241 is charged into the slot 231 as an adhesive. In one example, the adhesive resin 241 is formed of the encapsulating resin 30 corresponding to that of the first embodiment.

Referring to Fig. 14, the stator 220 is provided radially outward of the rotor 210 with a gap therebetween so as to face the rotor 210 in the radial direction. The stator 220 includes a stator core 250 and windings 260. The stator core 250 is formed of a core material 251. In one example, the core material 251 is a stack of electromagnetic steel sheets. The windings 260 are wound around teeth of the stator core 250. In one example, the windings 260 are copper wires.

The stator 220 includes a molded portion 270. The molded portion 270 covers surfaces of the stator core 250 and end portions 280 of the windings 260. The molded portion 270 is formed of the encapsulating resin 30 corresponding to that of the first embodiment.

Referring to Figs. 2, 3, and 14, in the present embodiment, the encapsulating portion 40 corresponds to the molded portion 270, and the encapsulated portion 50 corresponds to the stator core 250 and the windings 260. In the encapsulating resin 30 forming the molded portion 270, portions in contact with the surfaces of the stator core 250 and the end portions 280 of the windings 260 are configured as the second region 42 of the encapsulating portion 40.

Referring to Figs. 2, 3, and 15, the encapsulating portion 40 may be the adhesive resin 241, and the encapsulated portion 50 may be the magnet 240. In the encapsulating resin 30 forming the adhesive resin 241, a portion in contact with the magnet 240 is configured as the second region 42 of the encapsulating portion 40.

The present embodiment has the following advantages.

With this configuration, recyclable components included in the encapsulated portion 50 can be readily recovered from the motor 200 of the refrigeration device 100.

### <Fourth Embodiment>

A vehicle 300 according to a fourth embodiment will be described with reference to Figs. 3, 14, and 16. Components of the present embodiment that are common to those of the first embodiment are denoted by the same reference signs as in the first embodiment, and redundant description thereof will be omitted.

Fig. 16 is a schematic configuration diagram of the vehicle 300. The vehicle 300 includes a motor 310. In one example, the motor 310 is an inner-rotor motor corresponding to the motor 200 of the third embodiment. The motor 310 includes an encapsulating portion 40 and an encapsulated portion 50 corresponding to those of the motor 200 of the third embodiment. In one example, the vehicle 300 is a battery electric vehicle. When the vehicle 300 is a battery electric vehicle, the motor 310 is configured as a traction motor of the vehicle 300.

The vehicle 300 includes front wheels 320 and rear wheels 330. In the example of Fig. 16, the front wheels 320 are drive wheels of the vehicle 300. The motor 310 is connected to the front wheels 320. The front wheels 320 are driven by the motor 310. The motor 310 may be connected to the rear wheels 330, or may be connected to both the front wheels 320 and the rear wheels 330.

The vehicle 300 includes a battery 340. The battery 340 supplies electric power to the motor 310. The battery 340 may supply electric power to electrical systems other than the motor 310.

The present embodiment has the following advantages.

With this configuration, recyclable components included in the encapsulated portion 50 can be readily recovered from the motor 310 of the vehicle 300.

### <Modifications>

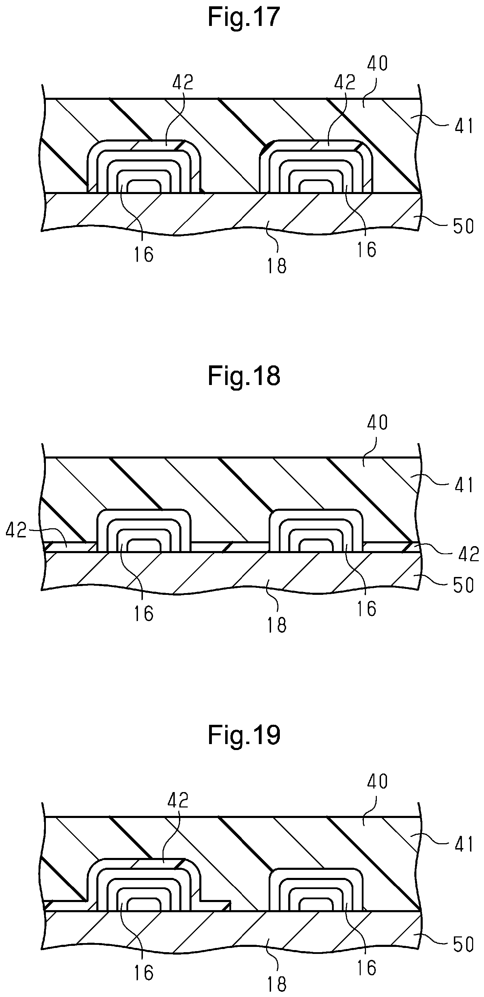

The blower 1, the motor 10, the method for manufacturing the motor 10, the method for recycling the motor 10, the refrigeration device 100, and the vehicle 300 of the present disclosure may be implemented in forms other than the above-described embodiments, for example, in the following modifications or in forms in which at least two mutually consistent modifications are combined.
- The first temperature may be higher than the Curie temperature of the magnet 21. In the present modification, the first temperature of the first filler 32 included in the second region 42 is higher than the Curie temperature of the magnet 21. The first filler 32 of the present modification is formed of at least one of sodium carbonate and magnesium hydroxide. With this configuration, the magnet 21 can be demagnetized when the encapsulating portion 40 is heated. Demagnetizing the magnet 21 allows the magnet 21 to be more readily recovered from the motor 10.
- Referring to Figs. 17 to 19, the first region 41 may be directly joined to the encapsulated portion 50. In the example of Fig. 17, the second region 42 is arranged between the windings 16 of the encapsulated portion 50 and the first region 41. In the example of Fig. 18, the second region 42 is arranged between the stator 11 of the encapsulated portion 50 and the first region 41. In the example of Fig. 19, the second region 42 is arranged between some of the windings 16 and the stator 11 of the encapsulated portion 50 and the first region 41.
- The magnets 21 may be samarium-cobalt magnets, ferrite magnets, or alnico magnets instead of neodymium magnets.
- The first filler 32 may be formed of a filler other than aluminum hydroxide. When the first filler 32 is formed of zinc carbonate, the second filler 33 is formed of sodium carbonate, magnesium hydroxide, aluminum hydroxide, or cellulose nanofiber. When the first filler 32 is formed of cellulose nanofiber, the second filler 33 is formed of sodium carbonate, magnesium hydroxide, or aluminum hydroxide. When the first filler 32 is formed of magnesium hydroxide, the second filler 33 is formed of sodium carbonate. When the first filler 32 is formed of sodium carbonate, the encapsulating resin 30 need not include the second filler 33.
- The base resin 31 of the encapsulating resin 30 forming the second region 42 may be a different type of resin from the base resin 31 of the encapsulating resin 30 forming the first region 41.
- The content of the first filler 32 in the second region 42 may be less than 50% by mass, provided that the second region 42 is thermally decomposable at the first temperature. The content of the first filler 32 in the second region 42 may be greater than 80% by mass, provided that the encapsulating portion 40 is formable in the method for manufacturing the motor 10.
- The content of the second filler 33 in the second region 42 may be greater than the content of the second filler 33 in the first region 41, provided that the second region 42 is thermally decomposable at the first temperature.
- Although embodiments of the blower 1, the motor 10, the method for manufacturing the motor 10, the method for recycling the motor 10, the refrigeration device 100, and the vehicle 300 have been described above, it will be understood that various changes in form and detail may be made to these embodiments without departing from the spirit and scope of the subject matter set forth in the claims.

### REFERENCE SIGNS LIST

1...Blower; 10, 200, 310...Motor; 16, 260...Winding; 18, 251...Core Material; 21, 240...Magnet; 30...Encapsulating Resin; 31...Base Resin; 32...First Filler; 33...Second Filler; 34...First Encapsulating Resin; 35...Second Encapsulating Resin; 40...Encapsulating Portion; 41...First Region; 42...Second Region; 50...Encapsulated Portion; 60...Injection Cylinder; 74...Formed Portion; 100...Refrigeration Device; 300...Vehicle.

## Claims

1. A motor (10), comprising:
an encapsulating portion (40) formed of an encapsulating resin (30); and
an encapsulated portion (50) encapsulated by the encapsulating portion (40), wherein
the encapsulating portion (40) includes a first region (41) and a second region (42) that is more readily thermally decomposable than the first region (41),
the second region (42) is provided between the first region (41) and the encapsulated portion (50),
the second region (42) includes a first filler (32) that thermally decomposes at a temperature higher than or equal to a first temperature, and
a content of the first filler (32) in the second region (42) is greater than a content of the first filler (32) in the first region (41).

2. The motor according to claim 1, wherein a base resin (31) of the encapsulating resin (30) forming the second region (42) is of a same type as a base resin (31) of the encapsulating resin (30) forming the first region (41).

3. The motor according to claim 1, wherein no interface is formed between the first region (41) and the second region (42).

4. The motor according to any one of claims 1 to 3, wherein the content of the first filler (32) in the second region (42) is in a range of 50% by mass to 80% by mass.

5. The motor according to any one of claims 1 to 4, wherein the first temperature of the first filler (32) included in the second region (42) is lower than or equal to a combustion temperature of a first encapsulating resin (34) forming the first region (41).

6. The motor according to any one of claims 1 to 5, wherein the first filler (32) is formed of aluminum hydroxide.

7. The motor according to any one of claims 1 to 6, wherein
the first region (41) includes a second filler (33) that thermally decomposes at a temperature higher than or equal to a second temperature higher than the first temperature, and
a content of the second filler (33) in the second region (42) is less than a content of the second filler (33) in the first region (41).

8. The motor according to any one of claims 1 to 7, wherein the encapsulated portion (50) includes at least one of a winding (16), a core material (18), and a magnet (21).

9. The motor according to claim 8, wherein
the encapsulated portion (50) includes the magnet (21), and
the first temperature of the first filler (32) included in the second region (42) is higher than a Curie temperature of the magnet (21).

10. A blower, comprising the motor (10) according to any one of claims 1 to 9.

11. A refrigeration device, comprising the motor (10) according to any one of claims 1 to 9.

12. A vehicle, comprising the motor (10) according to any one of claims 1 to 9.

13. A method for recycling the motor (10) according to any one of claims 1 to 9, the method comprising a heating step of heating the motor (10) to a temperature higher than or equal to the first temperature.

14. A method for manufacturing a motor (10), the motor (10) including an encapsulating portion (40) formed of a first encapsulating resin (34) and a second encapsulating resin (35) that is more readily thermally decomposable than the first encapsulating resin (34), and an encapsulated portion (50) encapsulated by the encapsulating portion (40), the method comprising a molding step of forming the encapsulating portion (40),
wherein, in the molding step, the encapsulating portion (40) is formed such that the second encapsulating resin (35) is provided between the first encapsulating resin (34) and the encapsulated portion (50).

15. The method for manufacturing a motor according to claim 14, wherein, in the molding step, the encapsulating portion (40) is formed by a single transfer molding operation using an injection cylinder (60) that contains the first encapsulating resin (34) and the second encapsulating resin (35).

16. The method for manufacturing a motor according to claim 14, wherein the molding step includes:
forming a part of the encapsulating portion (40) using the second encapsulating resin (35); and
forming another part of the encapsulating portion (40) using the first encapsulating resin (34) so as to cover at least part of a formed portion (74) formed using the second encapsulating resin (35).
